# FASCICULE DE BREVET EUROPEEN

(11) **EP 3 365 225 B1**
(45) Date de publication et mention de la délivrance du brevet: **14.08.2019**
(21) Numéro de dépôt: 16784513.0
(22) Date de dépôt: 21.10.2016
(51) Int. Cl.: B64C 13/10, B64C 13/04, G05G 5/03, G05G 9/047

(54) **DISPOSITIF DE COMMANDE DE VOL D'UN AERONEF**
FLUGSTEUERUNGSVORRICHTUNG FÜR EIN FLUGZEUG
FLIGHT CONTROL DEVICE FOR AN AIRCRAFT

(30) Priorité: 21.10.2015 FR 1560037
(43) Date de publication de la demande: 29.08.2018
(73) Titulaire: Safran Electronics & Defense, 92100 Boulogne-Billancourt (FR)
(72) Inventeur: GOMOLKO, Oleg, 92100 Boulogne-Billancourt (FR)
(74) Mandataire: Regimbeau
(86) Numéro de dépôt international: PCT/EP2016/075319
(87) Numéro de publication internationale: WO 2017/068102

(56) Documents cités:
- WO-A1-95/04959
- FR-A1- 3 011 815
- US-A- 3 409 252

## Description

### DOMAINE DE L'INVENTION

L'invention concerne un dispositif de commande de vol d'un aéronef.

### ETAT DE LA TECHNIQUE

Dans les aéronefs, les dispositifs de commande de vol permettent au pilote de commander l'orientation des gouvernes de vol de la voilure.

Les aéronefs sont traditionnellement équipés de manches de pilotage permettant au pilote d'actionner les ailerons et la gouverne de profondeur afin de commander l'attitude de l'aéronef sur les axes de tangage et de roulis. Le manche de pilotage est positionné entre les jambes du pilote, qui se sert de la force de ses bras pour actionner le manche.

Dans certains avions équipés de commandes de vol électriques, le manche de pilotage a été remplacé par un dispositif de commande de vol appelé « minimanche » (ou « Side Stick Unit » en anglais). Plus compact qu'un manche de pilotage classique, le minimanche est généralement intégré dans des parties latérales du cockpit et comprend une manette que le pilote actionne par le seul mouvement de son poignet. L'installation de minimanches a permis de dégager l'espace situé entre le pilote et le tableau de bord afin d'y installer d'autres équipements.

On connait du document FR 3 011 815 un dispositif de commande de vol pour aéronef comprenant un levier et un bâti. Le levier est relié au bâti par le biais d'un ensemble de liaison mécanique autorisant une rotation du levier par rapport au bâti selon deux axes de rotation X et Y perpendiculaires. La rotation du levier par rapport au bâti permet d'orienter les gouvernes pour commander les mouvements de roulis et de tangage de l'aéronef. L'ensemble de liaison mécanique relie également le levier à des actionneurs pour simuler un retour d'effort lors de la rotation du levier.

Dans un mode de réalisation proposé dans ce document, les actionneurs sont coaxiaux.

Cela permet de disposer les actionneurs sous le bâti du dispositif de commande et ainsi d'intégrer plus facilement le dispositif dans l'environnement du poste de pilotage (par exemple dans une console latérale ou centrale ou dans un accoudoir du siège du pilote).

### RESUME DE L'INVENTION

Un but de l'invention est de proposer un dispositif de commande de vol à trois axes de rotation (permettant par exemple de commander l'attitude de l'aéronef sur les axes de roulis, de tangage et de lacet) qui puisse être facilement intégré dans l'environnement du poste de pilotage.

Ce problème est résolu dans le cadre de la présente invention grâce à un dispositif de commande de vol d'un aéronef comprenant :
- un carter,
- une manette montée rotative par rapport au carter autour d'un centre de rotation,
- un premier arbre d'entrainement, un deuxième arbre d'entrainement et un troisième arbre d'entrainement, les arbres d'entrainement étant montés rotatif par rapport au carter selon un même axe de rotation,
- une première pièce de liaison montée pivotante d'une part sur le premier arbre autour d'un premier axe de rotation, et d'autre part sur la manette autour d'un quatrième axe de rotation,
- une deuxième pièce de liaison montée pivotante d'une part sur le deuxième arbre autour d'un deuxième axe de rotation, et d'autre part sur la manette autour d'un cinquième axe de rotation,
- une troisième pièce de liaison montée pivotante d'une part sur le troisième arbre autour d'un troisième axe de rotation, et d'autre part sur la manette autour d'un sixième axe de rotation,
dans lequel le premier axe, le deuxième axe et le troisième axe de rotation se coupent au centre de rotation de la manette.

Dans un tel dispositif, les arbres d'entrainement sont montés rotatif par rapport au carter selon un même axe de rotation, ce qui permet de disposer des moteurs alignés entre eux pour générer un retour d'effort sur les arbres d'entrainement.

En outre, le dispositif proposé permet de commander l'attitude de l'aéronef sur trois axes (roulis, tangage et lacet). Il est ainsi possible de supprimer les palonniers qui permettent classiquement de commander l'attitude de l'aéronef selon l'axe de lacet.

Le dispositif peut en outre présenter les caractéristiques suivantes :
- le premier axe, le deuxième axe et le troisième axe de rotation définissent une surface conique de révolution, ayant un angle au sommet compris entre 15 et 30 degrés,
- le premier axe, le deuxième axe et le troisième axe de rotation sont agencés avec un écart angulaire identique entre deux axes.
- le quatrième, le cinquième et le sixième axe de rotation se coupent au centre de rotation de la manette,
- le quatrième, le cinquième et le sixième axe de rotation s'étendent dans un même plan,
- le quatrième, le cinquième et le sixième axe de rotation sont agencés avec un écart angulaire de 120 degrés les uns par rapport aux autres,
- le premier arbre d'entrainement, le deuxième arbre d'entrainement et le troisième arbre d'entrainement sont coaxiaux.
- le dispositif comprend un premier moteur pour générer un premier couple résistif sur le premier arbre d'entrainement à l'encontre d'un couple d'entrainement généré sur le premier arbre d'entrainement par un pilote actionnant la manette, un deuxième moteur pour générer un deuxième couple résistif sur le deuxième arbre d'entrainement à l'encontre d'un couple d'entrainement généré sur le deuxième arbre d'entrainement par le pilote, et un troisième moteur pour générer un troisième couple résistif sur le troisième arbre d'entrainement à l'encontre d'un couple d'entrainement généré sur le troisième arbre d'entrainement par le pilote,
- les moteurs sont disposés en étant alignés le long de l'axe de rotation du premier arbre d'entrainement, du deuxième arbre d'entrainement et du troisième arbre d'entrainement.

### PRESENTATION DES DESSINS

D'autres caractéristiques et avantages ressortiront encore de la description qui suit, laquelle est purement illustrative et non limitative, et doit être lue en regard des dessins annexés, parmi lesquels :
- la figure 1 représente de manière schématique un dispositif de commande de vol conforme à un mode de réalisation de l'invention,
- la figure 2 représente de manière schématique une variante du dispositif de la figure 1,
- la figure 3 est un schéma cinématique du dispositif de la figure 1.

### DESCRIPTION DETAILLEE D'UN MODE DE REALISATION

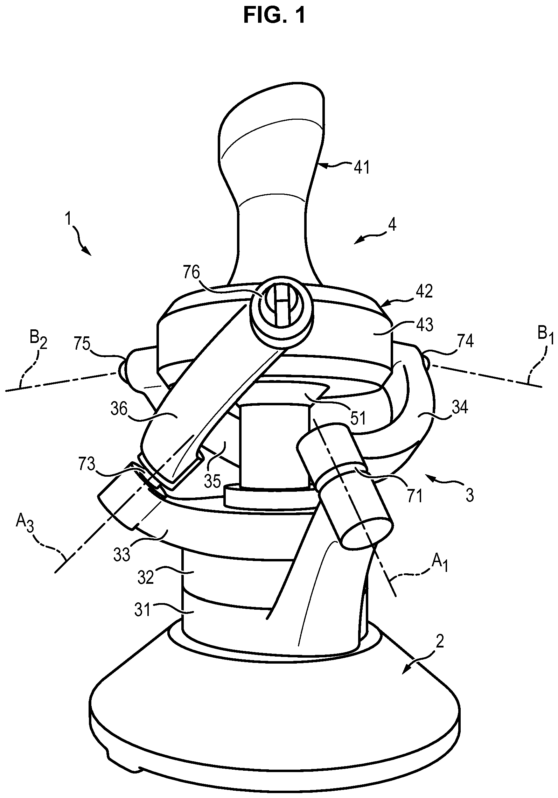

Sur la figure 1, le dispositif de commande de vol 1 représenté comprend un carter 2, un ensemble mécanique de liaison 3, et une manette 4 montée rotative par rapport au carter 2.

Le carter 2 est destiné par exemple à être intégré dans une colonne du poste de pilotage ou dans un accoudoir d'un siège de pilotage.

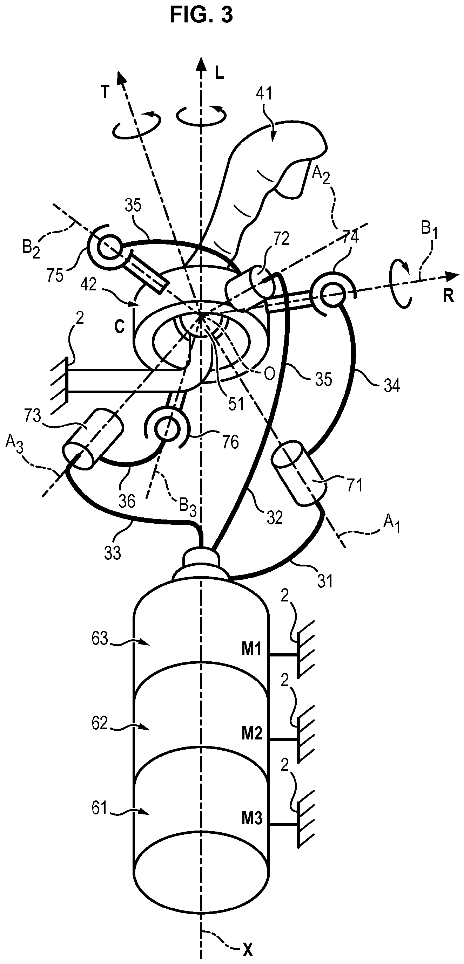

La manette 4 comprend une partie de préhension 41 adaptée pour être saisie par la main du pilote et une partie de raccordement 42 permettant de raccorder la manette 4 à l'ensemble mécanique de liaison 3. La manette 4 est montée rotative par rapport au carter 2 selon trois axes de rotation, à savoir : un axe de roulis R, un axe de tangage T et un axe de lacet L (les axes R, T et L sont visibles sur la figure 3).

L'ensemble mécanique de liaison 3 autorise un débattement de la manette 4 de l'ordre de 15 à 20 degrés selon les axes de roulis R et de tangage L.

Dans le mode de réalisation illustré sur la figure 1, le dispositif 1 comprend en outre une pièce centrale 51 montée fixe par rapport au carter 2 et présentant une surface externe sphérique. La partie de raccordement 42 de la manette 4 comprend une bague 43 présentant une surface interne sphérique. La bague 43 entoure la pièce centrale 51. Les surfaces sphériques coopèrent entre elles pour former un joint à rotule entre la manette 4 et le carter 2. La manette 4 est ainsi liée au carter 2 par le biais du joint à rotule.

L'ensemble mécanique de liaison 3 est logé à l'intérieur du carter 2. L'ensemble mécanique de liaison 3 permet d'une part, de lier la manette 4 au carter 2 en autorisant une rotation de la manette 4 par rapport au carter 2 selon les trois axes de rotation R, L et T, et d'autre part, de relier la manette 4 à des capteurs de position et à des moteurs pour générer un retour d'effort sur la manette 4 selon les trois axes de rotation.

L'ensemble mécanique de liaison 3 comprend trois arbres d'entrainement 31 à 33 et trois pièces de liaison 34 à 36.

Plus précisément, l'ensemble mécanique 3 comprend un premier arbre d'entrainement 31, un deuxième arbre d'entrainement 32 et un troisième arbre d'entrainement 33. Chacun des arbres d'entrainement 31 à 33 est monté mobile en rotation par rapport au carter 2. Les arbres d'entrainement 31 à 33 sont mobiles en rotation autour d'un axe de rotation commun (axe X représenté sur la figure 3). Les arbres d'entrainement 31 à 33 sont disposés de manière coaxiale. Le premier arbre d'entrainement 31 est tubulaire et entoure le deuxième arbre d'entrainement 32. Le deuxième arbre d'entrainement 32 est également tubulaire et entoure le troisième arbre d'entrainement 33. Ainsi, les arbres d'entrainement 31 à 33 sont disposés de manière coaxiale en étant imbriqués les uns dans les autres.

En utilisation, lorsque le dispositif 1 est monté dans une colonne du poste de pilotage ou dans un accoudoir du siège de pilotage, l'axe de rotation X s'étend selon une direction verticale.

L'ensemble mécanique de liaison 3 comprend en outre une première pièce de liaison 34, une deuxième pièce de liaison 35 et une troisième pièce de liaison 36.

La première pièce de liaison 34 relie le premier arbre d'entrainement 31 à la manette 4. La première pièce de liaison 34 est montée pivotante d'une part sur le premier arbre 31 autour d'un premier axe de rotation A₁ par le biais d'une liaison pivot 71, et d'autre part sur la manette 4 autour d'un quatrième axe de rotation B₁ par le biais d'une liaison pivot ou rotule 74.

De même, la deuxième pièce de liaison 35 relie le deuxième arbre d'entrainement 32 à la manette 4. La deuxième pièce de liaison 35 est montée pivotante d'une part sur le deuxième arbre 32 autour d'un deuxième axe de rotation A₂ par le biais d'une liaison pivot 72, et d'autre part sur la manette 4 autour d'un cinquième axe de rotation B₂ par le biais d'une liaison pivot ou rotule 75.

Enfin, la troisième pièce de liaison 36 relie le troisième arbre d'entrainement 33 à la manette 4. La troisième pièce de liaison 36 est montée pivotante d'une part sur le troisième arbre 33 autour d'un troisième axe de rotation A₃ par le biais d'une liaison pivot 73, et d'autre part sur la manette 4 autour d'un sixième axe de rotation B₃ par le biais d'une liaison pivot ou rotule 76.

Plus précisément, les pièces de liaison 34 à 36 sont montées rotatives sur la partie de liaison 42 de la manette 4.

Les liaisons pivots 71 à 73 sont agencées de sorte que le premier axe A₁, le deuxième axe A₂ et le troisième axe A₃ de rotation définissent une surface conique de révolution. La surface conique de révolution a un angle au sommet compris entre 15 et 30 degrés. De plus, le sommet de la surface conique est confondu avec le centre de rotation O de la manette 4. Autrement dit, le premier axe A₁, le deuxième axe A₂ et le troisième axe A₃ de rotation se coupent au centre de rotation O de la manette 4.

De même, le quatrième axe B₁, le cinquième axe B₂ et le sixième axe B₃ de rotation se coupent au centre de rotation O de la manette 4. De plus, le quatrième axe B₁, le cinquième axe B₂ et le sixième axe B₃ de rotation s'étendent dans un même plan.

La manette 4 est en position neutre lorsque le plan dans lequel s'étendent les quatrième, cinquième et sixième axes de rotation B₁ à B₃ est orthogonal à l'axe de rotation X des arbres d'entrainement 31 à 33.

Dans la position neutre, le premier axe A₁, le deuxième axe A₂ et le troisième axe A₃ de rotation sont agencés avec un écart angulaire identique entre deux axes successifs.

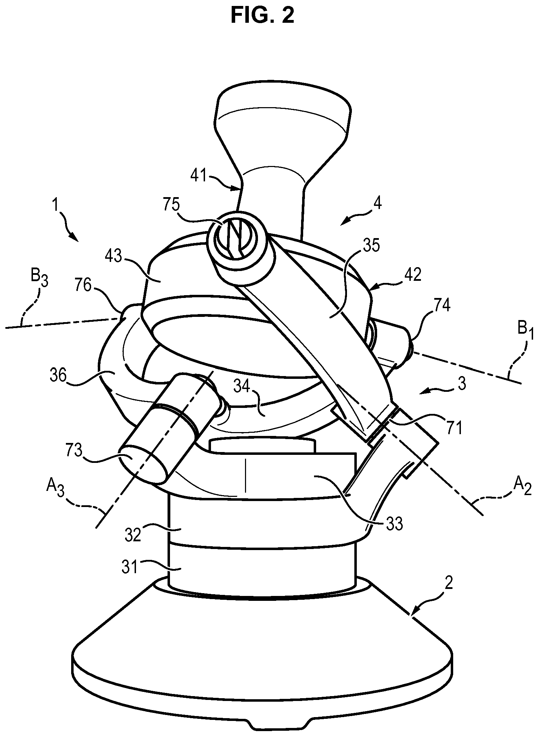

Dans une variante du dispositif de commande de vol illustrée sur la figure 2, le dispositif 1 ne comprend pas de pièce centrale 51. Autrement dit, le joint à rotule entre la manette 4 et le carter 2 a été supprimé.

Le fonctionnement du dispositif de la figure 2 est identique au fonctionnement du dispositif de la figure 1.

Cependant, dans le dispositif de la figure 1, le joint à rotule a pour effet de rendre hyperstatique la liaison mécanique entre la manette 4 et le carter 2, ce qui permet d'augmenter la robustesse du dispositif.

Comme illustré sur la figure 3, le dispositif de commande de vol 1 comprend en outre trois moteurs 61, 62 et 63.

Plus précisément, le dispositif de commande de vol 1 comprend un premier moteur 61 pour entrainer en rotation le premier arbre d'entrainement 31 par rapport au carter 2, un deuxième moteur 62 pour entrainer en rotation le deuxième arbre d'entrainement 32 par rapport au carter 2, et un troisième moteur 63 pour entrainer en rotation le troisième arbre d'entrainement 33 par rapport au carter 2 autour de l'axe X.

Le premier moteur 61, le deuxième moteur 62 et le troisième moteur 63 sont propres à générer un couple respectivement sur le premier arbre d'entrainement 31, le deuxième arbre d'entrainement 32 et le troisième arbre d'entrainement 33, afin de générer un retour d'effort sur la manette 4 par l'intermédiaire de l'ensemble mécanique de liaison 3.

Comme illustré sur la figure 3, les moteurs 61 à 63 sont disposés en étant alignés le long de l'axe de rotation X des arbres d'entrainement 31 à 33.

Le dispositif 1 peut comprendre des capteurs de position prévus pour mesurer une position angulaire de chaque arbre d'entrainement 31 à 33. Chaque capteur de position peut être constitué d'un codeur incrémental comprenant un disque rotatif monté solidaire en rotation du rotor du moteur auquel il est associé. Chaque capteur de position est propre à générer un signal de position représentatif de la position angulaire du rotor par rapport au stator (donc de la position angulaire de l'arbre d'entrainement auquel il est associé par rapport au carter).

Les signaux de position sont transmis au calculateur de commande de vol (FCC) de l'aéronef afin de commander le déplacement des gouvernes de commande de vol de l'aéronef.

De plus, le calculateur de commande de vol est propre à commander les moteurs 61 à 63 en fonction des signaux de position qu'il reçoit des capteurs de position, de manière à générer un retour d'effort sur les trois axes de rotation T, R et L de la manette 4.

En fonctionnement, si le pilote n'exerce aucun effort sur la manette 4, la manette 4 est maintenue en position neutre.

Afin de faire varier la position des gouvernes de commande de vol, le pilote peut déplacer la manette 4 selon les trois axes de rotations T, R et L.

Le déplacement de la manette 4 selon ces trois axes a pour effet de déplacer en rotation chacun des arbres d'entrainement 31 à 33 selon l'axe de rotation X. Autrement dit, l'ensemble mécanique de liaison 3 convertit la rotation de la manette 4 selon les trois axes T, R et L en trois rotations des arbres d'entrainement selon l'axe X.

Chaque capteur de position génère un signal de position représentatif de la position angulaire de l'arbre d'entrainement qui lui est associé.

Les signaux de position sont transmis au calculateur de commande de vol (FCC) de l'aéronef qui commande le déplacement des gouvernes de commande de vol de l'aéronef en fonction de ces signaux de position.

Le calculateur de commande de vol génère également des signaux de consigne pour commander chacun des moteurs 61 à 63 en fonction des signaux de position qu'il reçoit. Les signaux de consigne sont déterminés en fonction d'une loi de commande, de manière à générer un retour d'effort sur les trois axes de rotation T, R et L de la manette 4.

Dans un tel dispositif, le retour d'effort généré sur chacun des axes T, R et L est une combinaison des couples générés par les moteurs 61 à 63.

## Revendications

1. Dispositif de commande de vol (1) d'un aéronef comprenant :
- un carter (2),
- une manette (4) montée rotative par rapport au carter (2) autour d'un centre de rotation (O),
- un premier arbre d'entrainement (31), un deuxième arbre d'entrainement (32) et un troisième arbre d'entrainement (33), les arbres d'entrainement (31-33) étant montés rotatif par rapport au carter (2) selon un même axe de rotation (X),
- une première pièce de liaison (34) montée pivotante d'une part sur le premier arbre (31) autour d'un premier axe de rotation (A₁), et d'autre part sur la manette (4) autour d'un quatrième axe de rotation (B₁),
- une deuxième pièce de liaison (35) montée pivotante d'une part sur le deuxième arbre (32) autour d'un deuxième axe de rotation (A₂), et d'autre part sur la manette (4) autour d'un cinquième axe de rotation (B₂),
- une troisième pièce de liaison (36) montée pivotante d'une part sur le troisième arbre (33) autour d'un troisième axe de rotation (A₃), et d'autre part sur la manette (4) autour d'un sixième axe de rotation (B₃),
dans lequel le premier axe (A₁), le deuxième axe (A₂) et le troisième axe (A₃) de rotation se coupent au centre de rotation (O) de la manette (4).

2. Dispositif selon la revendication 1, dans lequel le premier axe (A₁), le deuxième axe (A₂) et le troisième axe (A₃) de rotation définissent une surface conique de révolution, ayant un angle au sommet compris entre 15 et 30 degrés.

3. Dispositif selon la revendication 2, dans lequel, lorsque la manette (4) est dans une position neutre dans laquelle les quatrième, cinquième et sixième axes de rotation (B₁-B₃) sont orthogonaux à l'axe de rotation (X) des arbres d'entrainement (31-33), le premier axe (A₁), le deuxième axe (A₂) et le troisième axe de rotation (A₃) sont agencés avec un écart angulaire identique entre deux axes.

4. Dispositif selon l'une des revendications 1 à 3, dans lequel le quatrième, le cinquième et le sixième axe de rotation (B₁-B₃) se coupent au centre de rotation (O) de la manette (4).

5. Dispositif selon la revendication 4, dans lequel le quatrième, le cinquième et le sixième axe de rotation (B₁-B₃) s'étendent dans un même plan.

6. Dispositif selon l'une des revendications 4 et 5, dans lequel le quatrième, le cinquième et le sixième axe de rotation (B₁-B₃) sont agencés avec un écart angulaire de 120 degrés les uns par rapport aux autres.

7. Dispositif selon l'une des revendications 1 à 6, dans lequel le premier arbre d'entrainement (31), le deuxième arbre d'entrainement (32) et le troisième arbre d'entrainement (33) sont coaxiaux.

8. Dispositif selon l'une des revendications 1 à 7, comprenant un premier moteur (61) pour générer un premier couple résistif sur le premier arbre d'entrainement (31) à l'encontre d'un couple d'entrainement généré sur le premier arbre d'entrainement par un pilote actionnant la manette (4), un deuxième moteur (62) pour générer un deuxième couple résistif sur le deuxième arbre d'entrainement (32) à l'encontre d'un couple d'entrainement généré sur le deuxième arbre d'entrainement par le pilote, et un troisième moteur (63) pour générer un troisième couple résistif sur le troisième arbre d'entrainement (33) à l'encontre d'un couple d'entrainement généré sur le troisième arbre d'entrainement par le pilote.

9. Dispositif selon la revendication 8, dans lequel les moteurs (61-63) sont disposés en étant alignés le long de l'axe de rotation (X) du premier arbre d'entrainement (31), du deuxième arbre d'entrainement (32) et du troisième arbre d'entrainement (33).

## Patentansprüche

1. Flugsteuerungsvorrichtung (1) für ein Flugzeug, umfassend:
- ein Gehäuse (2),
- einen Hebel (4), der in Bezug auf das Gehäuse (2) um ein Rotationszentrum (0) rotierend angebracht ist,
- eine erste Antriebswelle (31), eine zweite Antriebswelle (32) und eine dritte Antriebswelle (33), wobei die Antriebswellen (31-33) in Bezug auf das Gehäuse (2) gemäß einer selben Rotationsachse (X) rotierend angebracht sind,
- ein erstes Verbindungsteil (34), das schwenkend zum einen auf der ersten Welle (31) um eine erste Rotationsachse (A₁) und zum anderen auf dem Hebel (4) um eine vierte Rotationsachse (B₁) angebracht ist,
- ein zweites Verbindungsteil (35), das schwenkend zum einen auf der zweiten Welle (32) um eine zweite Rotationsachse (A₂) und zum anderen auf dem Hebel (4) um eine fünfte Rotationsachse (B₂) angebracht ist,
- ein drittes Verbindungsteil (36), das schwenkend zum einen auf der dritten Welle (33) um eine dritte Rotationsachse (A₃) und zum andern auf dem Hebel (4) um eine sechste Rotationsachse (B₃) angebracht ist,
wobei sich die erste Rotationsachse (A₁), die zweite Rotationsachse (A₂) und die dritte Rotationsachse (A₃) im Rotationszentrum (0) des Hebels (4) überschneiden.

2. Vorrichtung nach Anspruch 1, wobei die erste Rotationsachse (A₁), die zweite Rotationsachse (A₂) und die dritte Rotationsachse (A₃) eine konische Drehoberfläche mit einem Winkel an der Spitze definieren, der zwischen 15 und 30 Grad liegt.

3. Vorrichtung nach Anspruch 2, wobei, wenn der Hebel (4) in einer neutralen Position ist, in welcher die vierte, fünfte und sechste Rotationsachse (B₁-B₃) orthogonal zur Rotationsachse (X) der Antriebswellen (31-33) sind, die erste Rotationsachse (A₁), die zweite Rotationsachse (A₂) und die dritte Rotationsachse (A₃) mit einem identischen Winkelabstand zwischen zwei Achsen ausgebildet sind.

4. Vorrichtung nach einem der Ansprüche 1 bis 3, wobei sich die vierte, die fünfte und die sechste Rotationsachse (B₁-B₃) im Rotationszentrum (0) des Hebels (4) überschneiden.

5. Vorrichtung nach Anspruch 4, wobei sich die vierte, die fünfte und die sechste Rotationsachse (B₁-B₃) in einer selben Ebene erstrecken.

6. Vorrichtung nach einem der Ansprüche 4 und 5, wobei die vierte, die fünfte und die sechste Rotationsachse (B₁-B₃) mit einem Winkelabstand von 120 Grad im Verhältnis zueinander ausgebildet sind.

7. Vorrichtung nach einem der Ansprüche 1 bis 6, wobei die erste Antriebswelle (31), die zweite Antriebswelle (32) und die dritte Antriebswelle (33) koaxial sind.

8. Vorrichtung nach einem der Ansprüche 1 bis 7, umfassend einen ersten Motor (61), um ein erstes Widerstandsmoment auf der ersten Antriebswelle (31) entgegen einem Antriebsmoment zu erzeugen, erzeugt auf der ersten Antriebswelle von einem Piloten, der den Hebel (4) bedient, einen zweiten Motor (62), um ein zweites Widerstandsmoment auf der zweiten Antriebswelle (32) entgegen einem Antriebsmoment zu erzeugen, erzeugt auf der zweiten Antriebswelle von dem Piloten, und einen dritten Motor (63), um ein drittes Widerstandsmoment auf der dritten Antriebswelle (33) entgegen einem Antriebsmoment zu erzeugen, erzeugt auf der dritten Antriebswelle von dem Piloten.

9. Vorrichtung nach Anspruch 8, wobei die Motoren (61-63) aufgereiht entlang der Rotationsachse (X) der ersten Antriebswelle (31), der zweiten Antriebswelle (32) und der dritten Antriebswelle (33) angeordnet sind.

## Claims

1. A flight control device (1) for an aircraft, comprising:
- a casing (2),
- a handle (4) rotatably mounted with respect to the casing (2) around a center of rotation (0),
- a first drive shaft (31), a second drive shaft (32) and a third drive shaft (33), the drive shafts (31-33) being rotatably mounted with respect to the casing (2) along the same axis of rotation (X),
- a first connecting part (34) pivotally mounted, on the one hand, on the first shaft (31) around a first axis of rotation (A₁), and on the other hand on the handle (4) around a fourth axis of rotation (B₁),
- a second connecting part (35) pivotally mounted, on the one hand, on the second shaft (32) around a second axis of rotation (A₂), and on the other hand on the handle (4) around a fifth axis of rotation (B₂),
- a third connecting part (36) pivotally mounted, on the one hand, on the third shaft (33) around a third axis of rotation (A₃), and on the other hand on the handle (4) around a sixth axis of rotation (B₃),
wherein the first axis (A₁), the second axis (A₂) and the third axis (A₃) of rotation intersect at the center of rotation (0) of the handle (4).

2. The device according to claim 1, wherein the first axis (A₁), the second axis (A₂) and the third axis (A₃) of rotation define a conical surface of revolution having an apex angle comprised between 15 and 30 degrees.

3. The device according to claim 2, wherein, when the handle (4) is in a neutral position in which the fourth, fifth and sixth axes of rotation (B₁-B₃) are orthogonal to the axis of rotation (X) of the drive shafts (31-33), the first axis (A₁), the second axis (A₂) and the third axis of rotation (A₃) are arranged with an identical angular spacing between two axes.

4. The device according to one of claims 1 to 3, wherein the fourth, the fifth and the sixth axes of rotation (B₁-B₃) intersect at the center of rotation (0) of the handle (4).

5. The device according to claim 4, wherein the fourth, the fifth and the sixth axes of rotation (B₁-B₃) extend in a same plane.

6. The device according to one of claims 4 and 5, wherein the fourth, the fifth and the sixth axes of rotation (B₁-B₃) are arranged with an angular spacing of 120 degrees with respect to one another.

7. The device according to one of claims 1 to 6, wherein the first drive shaft (31), the second drive shaft (32) and the third drive shaft (33) are coaxial.

8. The device according to one of claims 1 to 7, comprising a first motor (61) for generating a first resisting torque on the first drive shaft (31) against a drive torque generated on the first drive shaft by a pilot activating the handle (4), a second motor (62) for generating a second resisting torque on the second drive shaft (32) against a drive torque generated on the second drive shaft by the pilot, and a third motor (63) for generating a third resisting torque on the third drive shaft (33) against a drive torque generated on the third drive shaft by the pilot.

9. The device according to claim 8, wherein the motors (61-63) are disposed by being aligned along the axis of rotation (X) of the first drive shaft (31), of the second drive shaft (32) and of the third drive shaft (33) .
